# EUROPEAN PATENT APPLICATION

(11) **EP 4 287 679 A1**
(43) Date of publication of application: **06.12.2023**
(21) Application number: 21923158.6
(22) Date of filing: 08.12.2021
(51) Int. Cl.: H04W 16/14, H04W 72/04, H04W 72/08, H04W 74/02

(54) **TERMINAL AND COMMUNICATION METHOD**

(30) Priority: 27.01.2021 JP 2021011397
(71) Applicant: NTT DOCOMO, INC., Tokyo 100-6150 (JP)
(72) Inventor: SHIBAIKE, Naoya, Tokyo 100-6150 (JP); HARADA, Hiroki, Tokyo 100-6150 (JP); NAGATA, Satoshi, Tokyo 100-6150 (JP)
(74) Representative: Hoffmann Eitle
(86) International application number: PCT/JP2021/045194
(87) International publication number: WO 2022/163153

(57) **Abstract**

A terminal includes: a control unit configured to determine a channel access mechanism, based on a condition; a reception unit configured to perform sensing, based on the determined channel access mechanism; and a transmission unit configured to perform transmission, based on a result of the sensing. The determined channel access mechanism is LBT (Listen before talk) with fixed sensing duration.

## Description

### [FIELD OF THE INVENTION]

The present invention relates to a terminal and a communication method in a wireless communication system.

### [BACKGROUND OF THE INVENTION]

Regarding NR (New Radio) (also referred to as "5G"), or a successor system to LTE (Long Term Evolution), technologies have been discussed which satisfy the following requirements: a high capacity system, high data transmission rate, low delay, simultaneous connection of multiple terminals, low cost, power saving, etc. (for example, Non-Patent Document 1).

NR release 17 discusses using a higher frequency band than an existing release (e.g., Non-Patent Document 2). For example, applicable numerologies including subcarrier spacings, channel bandwidths, etc., physical layer design, and possible failures in actual wireless communication in the 52.6 GHz to 71 GHz frequency band have been discussed.

### [Citation List]

### [Non-Patent Document]

[Non-Patent Document 1] 3GPP TS 38.300 V16.4.0 (2020-12)
[Non-Patent Document 2] 3GPP TS 38.306 V16.3.0 (2020-12)

### SUMMARY OF THE INVENTION

### [TECHNICAL PROBLEM]

Channel access with LBT (Listen before talk) execution and channel access without LBT execution are both supported in a newly operated frequency band that uses a frequency higher than existing frequencies. For example, in order to meet the regulation of each country, the channel access mechanism is required to be determined. However, a condition for determining the channel access mechanism and a detailed operation of sensing have not been clearly defined.

The present invention has been made in view of the foregoing points, and the channel access mechanism can be determined in accordance with a communication situation in a wireless communication system.

### [SOLUTION TO PROBLEM]

According to the disclosed technology, a terminal is provided. The terminal includes: a control unit configured to determine a channel access mechanism, based on a condition; a reception unit configured to perform sensing, based on the determined channel access mechanism; and a transmission unit configured to perform transmission, based on a result of the sensing. The determined channel access mechanism is LBT (Listen before talk) with fixed sensing duration.

### [ADVANTAGEOUS EFFECTS OF INVENTION]

According to the disclosed technique, in a wireless communication system, the channel access mechanism can be determined in accordance with a communication situation.

### BRIEF DESCRIPTION OF THE DRAWINGS

[Fig. 1] Fig. 1 is a drawing illustrating a configuration example of a wireless communication system according to an embodiment of the present invention.
[Fig. 2] Fig. 2 is a drawing illustrating an example of a frequency range according to an embodiment of the present invention.
[Fig. 3] Fig. 3 is a flowchart illustrating an example (1) of channel access in an embodiment of the present invention.
[Fig. 4] Fig. 4 is a flowchart illustrating an example (2) of channel access in an embodiment of the present invention.
[Fig. 5] Fig. 5 is a flowchart illustrating an example (3) of channel access in an embodiment of the present invention.
[Fig. 6] Fig. 6 is a flowchart illustrating an example (4) of channel access in an embodiment of the present invention.
[Fig. 7] Fig. 7 is a drawing illustrating an example of a functional structure of a base station 10 in an embodiment of the present invention.
[Fig. 8] Fig. 8 is a drawing illustrating an example of a functional structure of a terminal 20 in an embodiment of the present invention.
[Fig. 9] Fig. 9 is a drawing illustrating an example of a hardware structure of the base station 10 or the terminal 20 in an embodiment of the present invention.

### DETAILED DESCRIPTION OF THE PREFERRED EMBODIMENTS

In the following, referring to the drawings, one or more embodiments of the present invention will be described. It should be noted that the embodiments described below are examples. Embodiments of the present invention are not limited to the following embodiments.

In operations of a wireless communication system according to an embodiment of the present invention, existing techniques will be used appropriately. With respect to the above, for example, the existing techniques are related to, but not limited to, the existing LTE. Further, it is assumed that the term "LTE" used in the present specification has, unless otherwise specifically mentioned, a broad meaning including a scheme of LTE-Advanced and a scheme after LTE-Advanced (e.g., NR).

Furthermore, in one or more embodiments described below, terms that are used in the existing LTE are used, such as SS (Synchronization signal), PSS (Primary SS), SSS (Secondary SS), PBCH (Physical broadcast channel), PRACH (Physical random access channel), PDCCH (Physical Downlink Control Channel), PDSCH (Physical Downlink Shared Channel), PUCCH (Physical Uplink Control Channel), PUSCH (Physical Uplink Shared Channel), etc. The above-described terms are used for the sake of description convenience. Signals, functions, etc., which are similar to the above-described terms, may be referred to as different names. Further, terms, which are used in NR and correspond to the above-described terms, are NR-SS, NR-PSS, NR-SSS, NR-PBCH, NR-PRACH, etc. However, even when a signal is used for NR, there may be a case in which the signal is not referred to as "NR-".

In addition, in an embodiment of the present invention, the duplex method may be a TDD (Time Division Duplex) method, an FDD (Frequency Division Duplex) method, or any other method (e.g., Flexible Duplex, or the like).

Further, in an embodiment of the present invention, the expression, radio (wireless) parameters are "configured (set)" may mean that a predetermined value is pre-configured, or may mean that a radio parameter indicated by a base station 10 or a terminal 20 is configured.

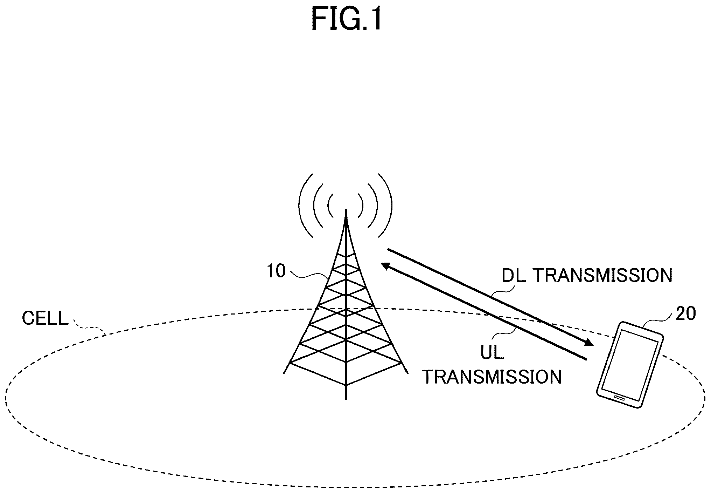

Fig. 1 is a drawing illustrating a configuration example of a wireless communication system according to an embodiment of the present invention. As illustrated in Fig. 1, a wireless communication system according to an embodiment of the present invention includes a base station 10 and a terminal 20. In Fig. 1, a single base station 10 and a single terminal 20 are illustrated as an example. There may be a plurality of base stations 10 and a plurality of terminals 20.

The base station 10 is a communication device that provides one or more cells and performs wireless communications with the terminal 20. Physical resources of radio signals may be defined in the time domain and the frequency domain, the time domain may be defined by the number of OFDM (Orthogonal Frequency Division Multiplexing) symbols, and the frequency domain may be defined by the number of sub-carriers or resource blocks. The base station 10 transmits a synchronization signal and system information to the terminal 20. The synchronization signal is, for example, an NR-PSS and an NR-SSS. The system information is transmitted via, for example, a NR-PBCH, and may be referred to as broadcast information. The synchronization signal and the system information may be referred to as an SSB (SS/PBCH block). As shown in Fig. 1, the base station 10 transmits a control signal or data in DL (Downlink) to the terminal 20 and receives a control signal or data in UL (Uplink) from the terminal 20. The base station 10 and terminal 20 are capable of transmitting and receiving a signal by performing the beamforming. Further, the base station 10 and the terminal 20 can both apply MIMO (Multiple Input Multiple Output) communication to DL or UL. Further, the base station 10 and the terminal 20 may both perform communications via a secondary cell (SCell: Secondary Cell) and a primary cell (PCell: Primary Cell) using CA (Carrier Aggregation). In addition, the terminal 20 may perform communications via a primary cell of the base station 10 and a primary secondary cell group cell (PSCell: Primary SCG Cell) of another base station 10 using DC (Dual Connectivity).

The terminal 20 may be a communication apparatus that includes a wireless communication function such as a smartphone, a mobile phone, a tablet, a wearable terminal, a communication module for M2M (Machine-to-Machine), or the like. As shown in Fig. 1, the terminal 20 uses various communication services provided by the wireless communication system by receiving control signals or data in DL from the base station 10 and transmitting control signals or data in UL to the base station 10. In addition, the terminal 20 receives various reference signals transmitted from the base station 10 and performs measurement of the propagation path quality based on the reception result of the reference signals.

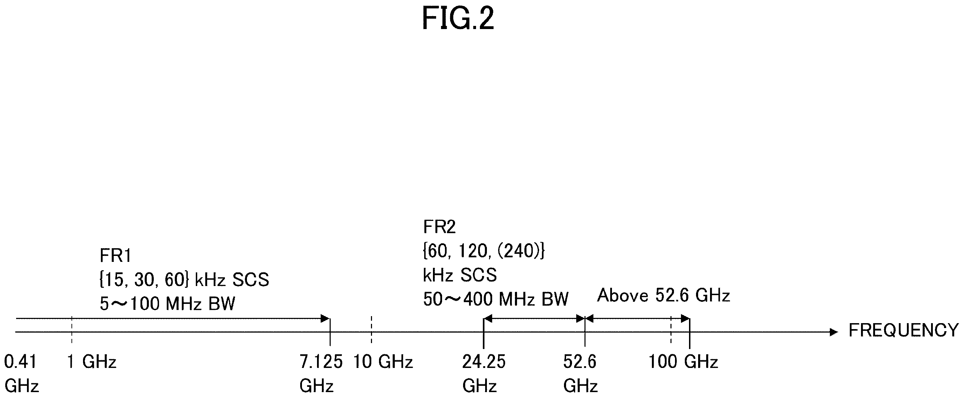

Fig. 2 is a drawing illustrating an example of a frequency range according to an embodiment of the present invention. In the NR specifications of 3GPP Release 15 and Release 16, for example, an operation in a frequency band of 52. 6 GHz or more has been discussed. Note that, as shown in Fig. 2, FR (Frequency range) 1 in which current operation is defined is a frequency band from 410 MHz to 7. 125 GHz, SCS (Sub carrier spacing) is 15, 30 or 60 kHz, and bandwidth is from 5 MHz to 100 MHz. FR2 is a frequency band from 24. 25 GHz to 52. 6 GHz, SCS is 60, 120 or 240 kHz, and bandwidth is from 50 MHz to 400 MHz. For example, the newly operated frequency band may be assumed to be from 52.6 GHz to 71 GHz, may assumed to be from 52.6 GHz to 114.25 GHz, or may include an unlicensed band or a no-license-required band.

As the regulation in the above-described frequency band, for example, in CEPT (European Conference of Postal and Telecommunications Administrations), there is a regulation in which LBT (Listen before talk) is performed as mandatory. Also, there is a regulation that requires LBT not to be performed. Which regulation is to be used is determined by, for example, mobility of the terminal 20, such as whether the terminal 20 is a fixed terminal or a mobile terminal.

Further, for example, in FCC (Federal Communications Commission), requirements for reducing interference are not specified in the 57-71 GHz band. For example, in Japanese regulations, carrier sensing is required as essential before starting transmission with transmission power exceeding 10 mW. Note that the carrier sensing has a mechanism similar to that of LBT, but details have not been determined.

Also, in 3GPP, it is being discussed to support both channel access with LBT execution and channel access without LBT execution at the time when the base station 10 or the terminal 20 starts channel occupancy. In addition, with respect to the LBT mechanism, omni-directional LBT, directional LBT, and an LBT type mechanism executed by the receiver are being discussed.

In addition, the necessity of limiting the operation of channel access that does not execute LBT is being discussed. For example, in order to satisfy the regulation, the necessity of limiting the operation of channel access that does not execute LBT is being discussed in a case where there are ATPC (Automatic Transmit Power Control), DFS (Dynamic Frequency Selection), long-term sensing, or other interference reduction mechanisms.

In addition, a mechanism or condition for switching between channel access with LBT execution and channel access without LBT execution (e.g., an assumption of being permitted by local regulations) is being discussed.

For example, in the 60 GHz band, it is being discussed to support two media access mechanisms: channel access with LBT execution; and channel access without LBT execution.

For example, it is being discussed to support three types of channel access: no LBT; long-term sensing; and short-term sensing. For example, no LBT may be applied in a case where EIRP (Equivalent Isotopically Radiated Power), transmission power, duty cycle of channel occupancy, characteristics related to spatial multiplexing, or the like, satisfies a condition. In addition, the long-term sensing provides an approach of allowing beams to be reused in a case where many beam collisions occur. The short-term sensing is a kind of LBT.

For example, there are LBT types 1) -3) shown below.

1) LBT with randomly determined sensing duration. For example, corresponding to the type 1 LBT in Release 16 NR-U (NR system using an unlicensed band). The possibility of transmission collision between multiple devices is low, but the transmission timing delay occurs due to the back-off.
2) LBT with fixed sensing duration. For example, corresponding to the type 2a/2b LBT in release 16 NR-U. The possibility of transmission collision between multiple devices is high, but the transmission timing delay is small because of no back-off.
3) No sensing and immediate transmission. For example, corresponding to the type 2c LBT in release 16 NR-U.

Here, in the 60 GHz band, LBT with a fixed sensing duration is being discussed, but the condition for determining the channel access mechanism and the detailed operation of sensing have not been clearly defined. Accordingly, for example, determining the channel access mechanism in an unlicensed band of 60 GHz is proposed.

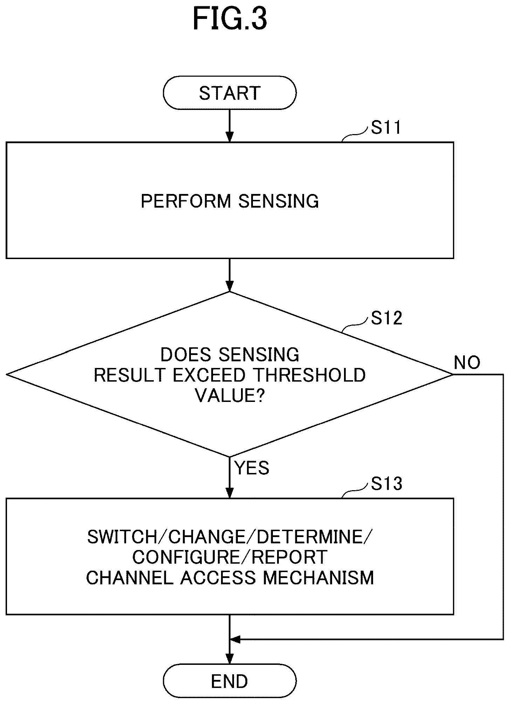

Fig. 3 is a flowchart illustrating an example (1) of channel access in an embodiment of the present invention. In step S11, the terminal 20 performs sensing. In subsequent step S12, the terminal 20 performs comparison between a threshold value and the sensing result. In subsequent step S13, the terminal 20 may switch, change, determine, configure, or report the channel access mechanism, based on the comparison in step S12. Note that the sensing in step S11 may be a long-term sensing.

The threshold value used in step S12 may be configured to be a fixed value. For example, it may be X dB or the power density per band, such as X dB/MHz. The threshold value may be variable, and may be determined based on at least one of, for example, the bandwidth to be sensed, the sensing directivity and the sensing periodicity.

As an example of switching of the channel access mechanism in step S13, a transmitting device may perform directional LBT by applying a random back-off in a case where the sensing result exceeds the threshold value, and the transmitting device may perform directional LBT without applying a random back-off in a case where the sensing result does not exceed the threshold value. The transmitting device may be the base station 10 or the terminal 20.

In addition, as an example of switching of the channel access mechanism in step S13, a receiving device may report, to another device, that the receiving device performs directional LBT by applying a random back-off in a case where the sensing result exceeds the threshold value. In a case where the sensing result does not exceed the threshold value, a transmitting device is not required to perform reporting, or a transmitting device may perform directional LBT without applying a random back-off. The receiving device may be the base station 10 and transmit the report to the terminal 20, or may be the terminal 20 and transmit the report to the base station 10.

The sensing in step S11 illustrated in Fig. 3 may be performed as shown in 1) to 4) below.

### 1) Sensing periodicity

The sensing may be performed periodically. The periodicity may be specified in advance in the technical specifications, may be configured by RRC (Radio Resource Control) configuration, or may be configured by MAC-CE (Medium Access Control-Control Element). In addition, the sensing may be performed semi-persistently, or switching between enabling and disabling may be performed. The switching between enabling and disabling may be performed according to a specific condition, RRC configuration, or MAC-CE configuration.

### 2) Sensing target range

The sensing may be performed omni-directionally in an entire range surrounding the target device. In addition, the sensing may be performed directionally. The sensing may be performed in a single direction of the target device. In addition, the sensing may be performed in multiple directions of the target device, or may be performed in the entire surrounding range by switching the directions.

### 3) Sensing threshold value

A fixed value may be configured as a threshold value to be used for the sensing. For example, it may be X dB or the power density per band, such as X dB/MHz. The threshold value may be variable, and may be change based on, for example, the bandwidth to be sensed, the sensing directivity, the sensing periodicity, and the like.

### 4) Sensing mechanism

The sensing may be the one that uses a result of existing channel occupancy measurement, or may be the one that uses a result of another RRM (Radio resource management).

The channel access mechanism used in step S13 illustrated in Fig. 3 may be an LBT mechanism. For example, the sensing target range of the performed LBT may be the entire range surrounding the target device. In addition, the sensing may be performed directionally. The sensing may be performed in a single direction of the target device. In addition, the sensing may be performed in multiple directions of the target device, or may be performed in the entire surrounding range by switching the directions.

The sensing start timing of the LBT may be immediately before the transmission in the same way as the timing of LBE (Load Based Equipment), for example. In addition, the sensing start timing of the LBT may be periodical in the same way as the timing of FBE (Frame Based Equipment), for example.

A random back-off may be applied to the sensing duration of the LBT. In addition, a random back-off is not required to be applied to the sensing duration of the LBT, and the sensing duration of the LBT may be a fixed duration.

Note that the channel access mechanism used in step S13 illustrated in Fig. 3 may be a channel access mechanism other than LBT. For example, ATPC (Automatic Transmit Power Control) may be applied to the transmission power control, and DFS (Dynamic Frequency Selection) may be applied to the switching of the frequency resource. Here, an operation of ATPC, DFS, or the like, may be specified by non-3GPP specifications, or may be described in the 3GPP specification that the operation conform to the non-3GPP specifications.

Note that the channel access mechanism used in step S13 illustrated in Fig. 3 may be a non-LBT mechanism. In other words, the LBT mechanism and the non-LBT mechanism may be switched to be used. The non-LBT mechanism may mean a mechanism in which the channel access mechanism is not used, or may mean a mechanism in which a channel access mechanism other than LBT is used.

A plurality of LBT or non-LBT channel access mechanisms with different parameters described above may be switched in step S13 illustrated in Fig. 3. In addition, in step S13 illustrated in Fig. 3, the LBT executing mode and the LBT non-executing mode may be switched.

In step S13 illustrated in Fig. 3, an applicable period may be configurable for the determined channel access mechanism or for the switched channel access mechanism. The period may be a fixed period, may be determined based on the comparison result between the sensing result in step S12 and the threshold value, may be determined based on the timing of acquiring the sensing result in step S11, or may be the same period as the sensing period in step S11.

Note that the sensing result in step S11 illustrated in Fig. 3 may be used. For example, the sensing result may be periodically reported to other devices. For example, the existing RRM may be reused. The existing RRM may be, for example, RLM (Radio link monitoring), BFR (Beam failure recovery), CBD (Candidate beam detection), L1 measurement, intra-band measurement (intra band measurement), inter-band measurement (inter band measurement), or channel occupancy measurement.

For example, the device that has received the report may configure the channel access mechanism to be used for the device that has performed the reporting, based on the reported sensing result. For example, the device that has received the report may be the base station 10, and the device that has performed the reporting may be the terminal 20.

For example, based on the sensing result acquired by a device, the channel access mechanism to be used by the device or a device itself may be determined or configured, or the device may determine or configure the channel access mechanism to be used for a device present in the same cell or frequency band as the device. For example, the device may be the base station 10, and a device present in the same cell or frequency band as the device may be the terminal 20.

For example, the sensing duration in the LBT with a fixed sensing duration may be 5 micro-seconds. This corresponds to one sensing duration in the LBT with a random back-off that is one of the requirements in 60 GHz band. In addition, the sensing duration in the LBT with a fixed sensing duration may be 5*N micro-seconds. The sensing duration can be flexibly determined using a unit of 5 micro-seconds. In addition, the sensing can be performed by applying a different analog beam for each unit of 5 micro-seconds.

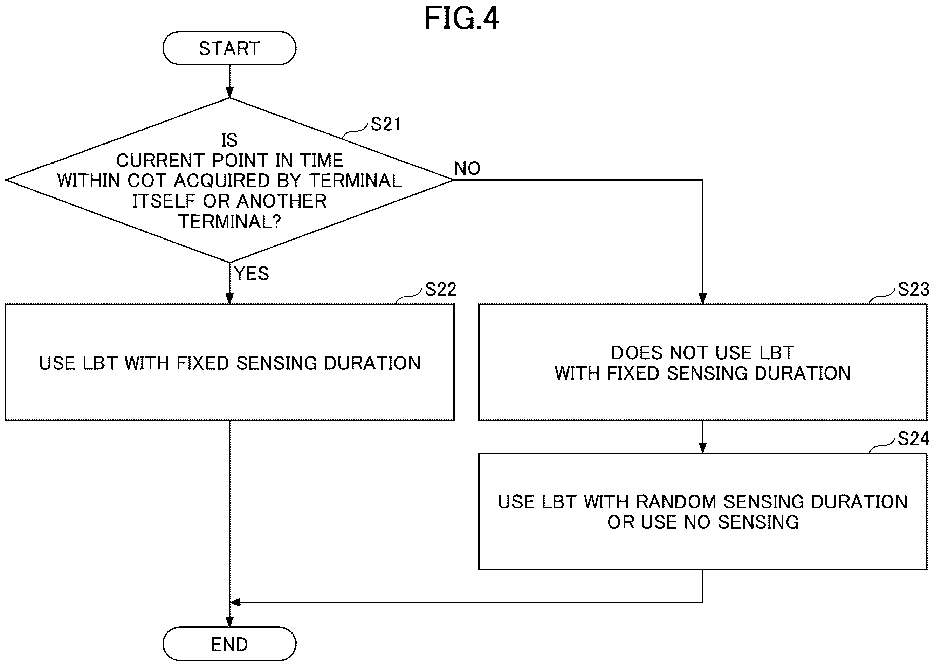

Fig. 4 is a flowchart illustrating an example (2) of channel access in an embodiment of the present invention. In step S21, the terminal 20 determines whether or not the current point in time is within the COT acquired by the terminal 20 itself or another device. In a case where the current point in time is within the COT (YES in S21), the process proceeds to step S22, and in a case where the current point in time is not within the COT (NO in S21), the process proceeds to step S23. In step S22, the terminal 20 uses the LBT with a fixed sensing duration. On the other hand, in step S23, the terminal does not use the LBT with a fixed sensing duration. In subsequent step S24, the terminal 20 uses the LBT with a random sensing duration or does not use the sensing. Note that, the step S24 may be performed or is not required to be performed.

For example, in a case where it is before the start of transmission within the COT acquired by the terminal itself or another device, the terminal 20 may perform the LBT with a fixed sensing duration. In addition, in a case where the LBT with a fixed sensing duration is not configured, the terminal 20 may select the LBT with a random sensing duration or the LBT without sensing to be performed.

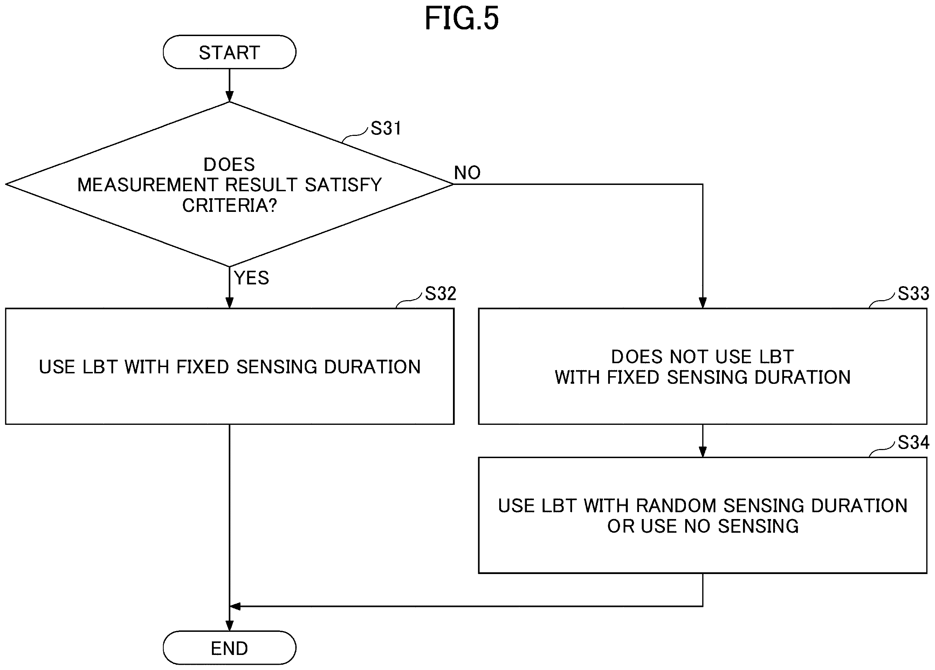

Fig. 5 is a flowchart illustrating an example (3) of channel access in an embodiment of the present invention. In step S31, the terminal 20 determines whether or not the measurement result satisfies criteria. The measurement result may be a result of RSSI (Received Signal Strength Indicator) measurement or a result of channel occupancy measurement. The criteria may be exceeding a threshold value, or may be being lower than a threshold value. In a case where the measurement result satisfies the criteria (YES in S31), the process proceeds to step S32, and in a case where the measurement result does not satisfy the criteria (NO in S31), the process proceeds to step S33.

In step S32, the terminal 20 uses the LBT with a fixed sensing duration. On the other hand, in step S33, the terminal 20 does not use the LBT with a fixed sensing duration. In subsequent step S34, the terminal 20 uses the LBT with a random sensing duration or does not use the sensing. Note that, the step S34 may be performed or is not required to be performed.

In addition, in step S13 illustrated in Fig. 3, when performing the switching between the mode with LBT execution and the mode without LBT execution, in a case where the mode with LBT execution is configured, the LBT with a fixed sensing duration may be applied to a specific signal or channel, or an indication indicating that the LBT with a fixed sensing duration is to be applied may be indicated from the base station 10 to the terminal 20.

The specific signal or channel may be, for example, at least one of the following 1) to 3).

1) SSB
2) PRACH
3) PUCCH (for example, PUCCH for which a periodic resource is configured)

In addition, the terminal 20 may determine whether or not to use the LBT with a fixed sensing duration based on at least one of the following 1) to 4).

1) Definition by specification
2) Configuration by RRC
3) Configuration by MAC-CE
4) Indication by DCI (ChannelAccess-CPext-CAPC field included in DCI format 0_1 may be reused)

Note that above 1) to 4 may be freely combined. For example, whether the LBT with a fixed sensing duration is to be used may be determined according to the configuration by RRC and the indication by DCI. For example, whether the LBT with a fixed sensing duration is to be used may be configured by RRC, and using the LBT with a fixed sensing duration may be indicated before transmission of PUSCH that is scheduled by UL grant DCI. RRC or the UL grant DCI may be replaced with MAC-CE.

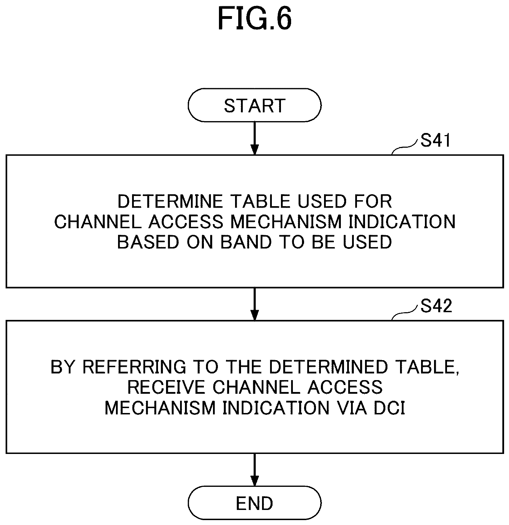

Fig. 6 is a flowchart illustrating an example (4) of channel access in an embodiment of the present invention. In step S41, the terminal 20 determines a table to be used for the channel access mechanism indication based on the band to be used. The band to be used may be, for example, a specific frequency band, or an unlicensed band. The specific frequency band may be, for example, 52.6 GHz-71 GHz, frequencies higher than 52.6 GHz, or a frequency band corresponding to FRx (x is equal to or greater than 2).

In step S42, the terminal 20 receives a channel access mechanism indication by DCI by referring to the determined table. The table in which an entry is specified by the DCI may include, for example, a channel access type and a parameter related to CP extension. The table in which an entry is specified by the DCI may be constructed by reusing an unused field in a table of existing technologies, or a new table may be defined separately from a table of existing technologies. Which of the table of existing technologies or the newly defined table is to be used may be configured by RRC, may be configured by MAC-CE, may be indicated by DCI, or configured by a combination of RRC, MAC-CE, and DCI.

Note that the above-described channel access operation may be performed not only by the terminal 20 but also by the base station 10 in the same way.

According to the above embodiment, the base station 10 and the terminal 20 can determine the channel access mechanism based on the state of being within or out of the COT, the measurement result, the band to be used, or the like.

That is, in a wireless communication system, the channel access mechanism can be determined in accordance with a communication situation.

### (Apparatus configuration)

Next, a functional configuration example of the base station 10 and the terminal 20 for performing the processes and operations described above will be described. The base station 10 and terminal 20 include functions for implementing the embodiments described above. It should be noted, however, that each of the base stations 10 and the terminal 20 may include only some of the functions in an embodiment.

### <Base station 10>

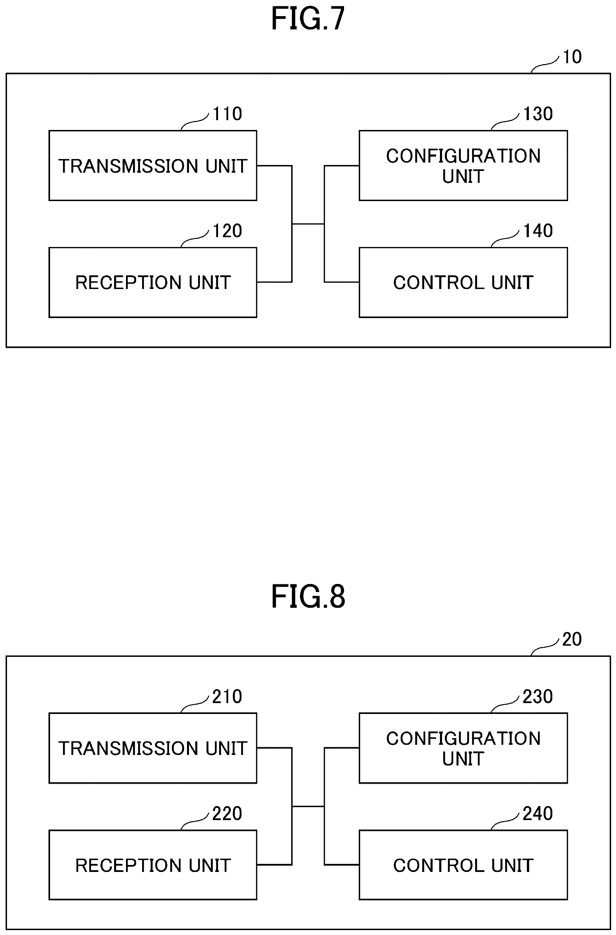

Fig. 7 is a drawing illustrating an example of a functional structure of a base station 10 according to an embodiment of the present invention. As shown in Fig. 7, the base station 10 includes a transmission unit 110, a reception unit 120, a configuration unit 130, and a control unit 140. The functional structure illustrated in Fig. 7 is merely an example. Functional divisions and names of functional units may be anything as long as operations according to an embodiment of the present invention can be performed.

The transmission unit 110 includes a function for generating a signal to be transmitted to the terminal 20 side and transmitting the signal wirelessly. Further, the transmission unit 110 transmits an inter-network-node message to another network node. The reception unit 120 includes a function for receiving various signals transmitted from the terminal 20 and acquiring, for example, information of a higher layer from the received signals. Further, the transmission unit 110 has a function to transmit NR-PSS, NR-SSS, NR-PBCH, DL/UL control signals, and the like to the terminal 20. Further, the reception unit 120 receives an inter-network-node message from another network node.

The configuration unit 130 stores preset information and various configuration information items to be transmitted to the terminal 20. Contents of the configuration information are, for example, information related to the channel access configuration.

The control unit 140 performs control related to the channel access configuration as described in the embodiments. Further, the control unit 240 controls LBT. In addition, the control unit 140 performs scheduling. The functional units related to signal transmission in the control unit 140 may be included in the transmission unit 110, and the functional units related to signal reception in the control unit 140 may be included in the reception unit 120.

### <Terminal 20>

Fig. 8 is a drawing illustrating an example of a functional structure of a terminal 20 according to an embodiment of the present invention. As shown in FIG. 8, the terminal 20 includes a transmission unit 210, a reception unit 220, a configuration unit 230, and a control unit 240. The functional structure illustrated in Fig. 8 is merely an example. Functional divisions and names of functional units may be anything as long as operations according to an embodiment of the present invention can be performed.

The transmission unit 210 generates a transmission signal from transmission data and transmits the transmission signal wirelessly. The reception unit 220 receives various signals wirelessly and obtains upper layer signals from the received physical layer signals. Further, the reception unit 220 has a function for receiving NR-PSS, NR-SSS, NR-PBCH, DL/UL/SL control signals, etc., transmitted from the base station 10. Further, for example, with respect to the D2D communications, the transmission unit 210 transmits, to another terminal 20, PSCCH (Physical Sidelink Control Channel), PSSCH (Physical Sidelink Shared Channel), PSDCH (Physical Sidelink Discovery Channel), PSBCH (Physical Sidelink Broadcast Channel), etc., and the reception unit 220 receives, from another terminal 20, PSCCH, PSSCH, PSDCH, or PSBCH.

The configuration unit 230 stores various configuration information items received by the reception unit 220 from the base station 10. In addition, the configuration unit 230 also stores pre-configured configuration information. Contents of the configuration information are, for example, information related to the channel access configuration.

The control unit 240 performs control related to the channel access configuration as described in the embodiments. Further, the control unit 240 controls LBT. The functional units related to signal transmission in the control unit 240 may be included in the transmission unit 210, and the functional units related to signal reception in the control unit 240 may be included in the reception unit 220.

### (Hardware structure)

In the above functional structure diagrams used for describing an embodiment of the present invention (Fig. 7 and Fig. 8), functional unit blocks are shown. The functional blocks (function units) are realized by a freely-selected combination of hardware and/or software. Further, realizing means of each functional block is not limited in particular. In other words, each functional block may be realized by a single apparatus in which multiple elements are coupled physically and/or logically, or may be realized by two or more apparatuses that are physically and/or logically separated and are physically and/or logically connected (e.g., wired and/or wireless). The functional blocks may be realized by combining the above-described one or more apparatuses with software.

Functions include, but are not limited to, judging, determining, calculating, processing, deriving, investigating, searching, checking, receiving, transmitting, outputting, accessing, resolving, selecting, establishing, comparing, assuming, expecting, and deeming; broadcasting, notifying, communicating, forwarding, configuring, reconfiguring, allocating, mapping, and assigning, etc. For example, a functional block (component) that functions to transmit is called a transmitting unit or a transmitter. In either case, as described above, the implementation method is not particularly limited.

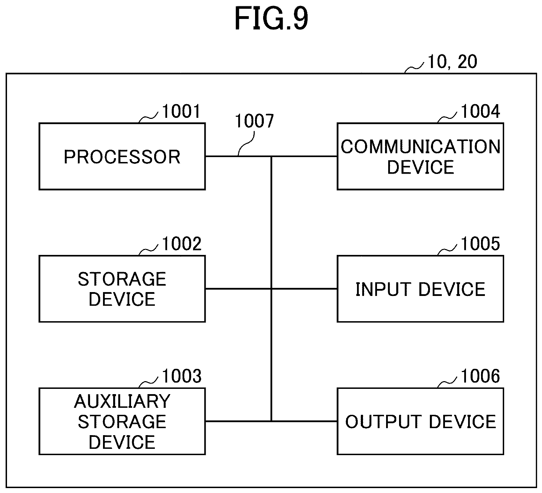

For example, the base station 10, terminal 20, etc., according to an embodiment of the present disclosure may function as a computer for processing the radio communication method of the present disclosure. Fig. 9 is a drawing illustrating an example of hardware structures of the base station 10 and terminal 20 according to an embodiment of the present invention. Each of the above-described base station 10 and the terminal 20 may be physically a computer device including a processor 1001, a storage device 1002, an auxiliary storage device 1003, a communication device 1004, an input device 1005, an output device 1006, a bus 1007, etc.

It should be noted that, in the descriptions below, the term "apparatus" can be read as a circuit, a device, a unit, etc. The hardware structures of the base station 10 and terminal 20 may include one or more of each of the devices illustrated in the figure, or may not include some devices.

Each function in the base station 10 and terminal 20 is realized by having the processor 1001 perform an operation by reading predetermined software (programs) onto hardware such as the processor 1001 and the storage device 1002, and by controlling communication by the communication device 1004 and controlling at least one of reading and writing of data in the storage device 1002 and the auxiliary storage device 1003.

The processor 1001 controls the entire computer by, for example, controlling the operating system. The processor 1001 may include a central processing unit (CPU) including an interface with a peripheral apparatus, a control apparatus, a calculation apparatus, a register, etc. For example, the above-described control unit 140, control unit 240, and the like, may be implemented by the processor 1001.

Further, the processor 1001 reads out onto the storage device 1002 a program (program code), a software module, or data from the auxiliary storage device 1003 and/or the communication device 1004, and performs various processes according to the program, the software module, or the data. As the program, a program is used that causes the computer to perform at least a part of operations according to an embodiment of the present invention described above. For example, the control unit 140 of the base station 10 illustrated in Fig. 7 may be realized by control programs that are stored in the storage device 1002 and are executed by the processor 1001. Further, for example, the control unit 240 of the terminal 20 illustrated in Fig. 8 may be realized by control programs that are stored in the storage device 1002 and are executed by the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The storage device 1002 is a computer-readable recording medium, and may include at least one of a ROM (Read Only Memory), an EPROM (Erasable Programmable ROM), an EEPROM (Electrically Erasable Programmable ROM), a RAM (Random Access Memory), etc. The storage device 1002 may be referred to as a register, a cache, a main memory, etc. The storage device 1002 is capable of storing programs (program codes), software modules, or the like, that are executable for performing communication processes according to an embodiment of the present invention.

The auxiliary storage device 1003 is a computer-readable recording medium, and may include at least one of, for example, an optical disk such as a CD-ROM (Compact Disc ROM), a hard disk drive, a flexible disk, a magneto optical disk (e.g., compact disc, digital versatile disc, Blu-ray (registered trademark) disc), a smart card, a flash memory (e.g., card, stick, key drive), a floppy (registered trademark) disk, a magnetic strip, etc. The above recording medium may be a database including the storage device 1002 and/or the auxiliary storage device 1003, a server, or any other appropriate medium.

The communication device 1004 is hardware (transmission and reception device) for communicating with computers via at least one of a wired network and a wireless network, and may be referred to as a network device, a network controller, a network card, a communication module, etc. The communication device 1004 may comprise a high frequency switch, duplexer, filter, frequency synthesizer, or the like, for example, to implement at least one of a frequency division duplex (FDD) and a time division duplex (TDD). For example, the transmitting/receiving antenna, the amplifier unit, the transmitting/receiving unit, the transmission line interface, and the like, may be implemented by the communication device 1004. The transmitting/receiving unit may be physically or logically divided into a transmitting unit and a receiving unit.

The input device 1005 is an input device that receives an external input (e.g., keyboard, mouse, microphone, switch, button, sensor). The output device 1006 is an output device that outputs something to the outside (e.g., display, speaker, LED lamp). It should be noted that the input device 1005 and the output device 1006 may be integrated into a single device (e.g., touch panel).

Further, the apparatuses including the processor 1001, the storage device 1002, etc., are connected to each other via the bus 1007 used for communicating information. The bus 1007 may include a single bus, or may include different buses between the apparatuses.

Further, each of the base station 10 and terminal 20 may include hardware such as a microprocessor, a digital signal processor (DSP), an ASIC (Application Specific Integrated Circuit), a PLD (Programmable Logic Device), a FPGA (Field Programmable Gate Array), etc., and a part or all of each functional block may be realized by the hardware. For example, the processor 1001 may be implemented by at least one of the above hardware elements.

### (Embodiment summary)

As described above, according to an embodiment of the present invention, a terminal is provided. The terminal includes: a control unit configured to determine a channel access mechanism, based on a condition; a reception unit configured to perform sensing, based on the determined channel access mechanism; and a transmission unit configured to perform transmission, based on a result of the sensing. The determined channel access mechanism is LBT (Listen before talk) with a fixed sensing duration.

According to above configuration, the base station 10 and the terminal 20 can determine the channel access mechanism based on the state of being within or out of the COT, the measurement result, the band to be used, or the like. That is, in a wireless communication system, the channel access mechanism can be determined in accordance with a communication situation.

A unit of the fixed sensing duration may be 5 microseconds. According to the above configuration, the terminal 20 can flexibly determine the sensing duration, and apply different beams to the sensing.

The above-described condition may be whether a current point in time is within COT (Channel Occupancy Time) acquired by the terminal itself or another terminal. According to the configuration, the base station 10 and the terminal 20 can determine the channel access mechanism based on the state of being within or out of the COT.

The above-described condition may be whether a result of RSSI (Received Signal Strength Indicator) measurement or a result of channel occupancy measurement is less than a threshold value. According to the configuration, the base station 10 and the terminal 20 can determine the channel access mechanism based on a result of RSSI measurement or a result of channel occupancy measurement.

The condition may mean that an entry is to be indicated via DCI, the entry being in a table specifying the channel access mechanism, and the table being determined based on a band to be used. According to the configuration, the terminal 20 can determine the channel access mechanism by using the table that is defined according to the band to be used.

In addition, according to an embodiment of the present invention, a communication method performed by a terminal is provided. The communication method includes: determining a channel access mechanism, based on a condition; performing sensing, based on the determined channel access mechanism; and performing transmission, based on a result of the sensing. The determined channel access mechanism is LBT (Listen before talk) with a fixed sensing duration.

According to above configuration, the base station 10 and the terminal 20 can determine the channel access mechanism based on the state of being within or out of the COT, the measurement result, the band to be used, or the like. That is, in a wireless communication system, the channel access mechanism can be determined in accordance with a communication situation.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction) . Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

Further, information indication may be performed not only by methods described in an aspect/embodiment of the present specification but also a method other than those described in an aspect/embodiment of the present specification. For example, the information indication may be performed by physical layer signaling (e.g., DCI (Downlink Control Information), UCI (Uplink Control Information)), upper layer signaling (e.g., RRC (Radio Resource Control) signaling, MAC (Medium Access Control) signaling, broadcast information (MIB (Master Information Block), SIB (System Information Block))), other signals, or combinations thereof. Further, RRC signaling may be referred to as an RRC message. The RRC signaling may be, for example, an RRC connection setup message, an RRC connection reconfiguration message, or the like.

Each aspect/embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (new Radio), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, and a next generation system enhanced therefrom. Further, multiple systems may also be applied in combination (e.g., at least one of LTE and LTE-A combined with 5G, etc.).

The order of processing steps, sequences, flowcharts or the like of an aspect/embodiment described in the present specification may be changed as long as there is no contradiction. For example, in a method described in the present specification, elements of various steps are presented in an exemplary order. The order is not limited to the presented specific order.

The particular operations, that are supposed to be performed by the base station 10 in the present specification, may be performed by an upper node in some cases. In a network including one or more network nodes including the base station 10, it is apparent that various operations performed for communicating with the terminal 20 may be performed by the base station 10 and/or another network node other than the base station 10 (for example, but not limited to, MME or S-GW). According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL) and wireless technologies (infrared, microwave, etc.), at least one of these wired line technologies and wireless technologies is included within the definition of the transmission medium.

Information, a signal, or the like, described in the present specification may represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms "BS: Base Station", "Radio Base Station", "Base Station Apparatus", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as a macro-cell, a small cell, a femtocell, a picocell and the like.

The base station may accommodate (provide) one or more (e.g., three) cells. In the case where the base station accommodates a plurality of cells, the entire coverage area of the base station may be divided into a plurality of smaller areas, each smaller area may provide communication services by means of a base station subsystem (e.g., an indoor small base station or a remote Radio Head (RRH)). The term "cell" or "sector" refers to a part or all of the coverage area of at least one of the base station and base station subsystem that provides communication services at the coverage.

In the present disclosure, terms such as "mobile station (MS)", "user terminal", "user equipment (UE)", "terminal", and the like, may be used interchangeably.

There is a case in which the mobile station may be referred to, by a person skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station and the mobile station may be referred to as a transmission apparatus, reception apparatus, communication apparatus, or the like. The at least one of the base station and the mobile station may be a device mounted on the mobile station, the mobile station itself, or the like. The mobile station may be a vehicle (e.g., a car, an airplane, etc.), an unmanned mobile body (e.g., a drone, an automated vehicle, etc.), or a robot (manned or unmanned). At least one of the base station and the mobile station may include an apparatus that does not necessarily move during communication operations. For example, at least one of the base station and the mobile station may be an IoT (Internet of Things) device such as a sensor.

Further, the base station in the present disclosure may be read as the user terminal. For example, each aspect/embodiment of the present disclosure may be applied to a configuration in which communications between the base station and the user terminal are replaced by communications between multiple terminals 20 (e.g., may be referred to as D2D (Device-to-Device), V2X (Vehicle-to-Everything), etc.). In this case, the function of the base station 10 described above may be provided by the terminal 20. Further, the phrases "up" and "down" may also be replaced by the phrases corresponding to terminal-to-terminal communication (e.g., "side"). For example, an uplink channel, a downlink channel, or the like, may be read as a sidelink channel.

Further, the user terminal in the present disclosure may be read as the base station. In this case, the function of the user terminal described above may be provided by the base station.

The term "determining" used in the present specification may include various actions or operations. The "determining" may include, for example, a case in which "judging", "calculating", "computing", "processing", "deriving", "investigating", "looking up, search, inquiry" (e.g., looking up a table, database, or other data structures), or "ascertaining" is deemed as "determining". Further, the "determining" may include a case in which "receiving" (e.g., receiving information), "transmitting" (e.g., transmitting information), "inputting", "outputting", or "accessing" (e.g., accessing data in a memory) is deemed as "determining". Further, the "determining" may include a case in which "resolving", "selecting", "choosing", "establishing", "comparing", or the like is deemed as "determining". In other words, the "determining" may include a case in which a certain action or operation is deemed as "determining". Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, and printed electrical connections and, as a number of non-limiting and non-inclusive examples, electromagnetic energy having wavelengths in the radio frequency region, the microwave region, and the light (both visible and non-visible) region.

The reference signal may be abbreviated as RS or may be referred to as a pilot, depending on the applied standards.

The description "based on" used in the present specification does not mean "based on only" unless otherwise specifically noted. In other words, the phrase "based on" means both "based on only" and "based on at least".

Any reference to an element using terms such as "first" or "second" as used in the present disclosure does not generally limit the amount or the order of those elements. These terms may be used in the present disclosure as a convenient way to distinguish between two or more elements. Therefore, references to the first and second elements do not imply that only two elements may be employed or that the first element must in some way precede the second element.

"Means" included in the configuration of each of the above apparatuses may be replaced by "parts," "circuits," "devices," etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may include one or more frames in the time domain. Each of the one or more frames in the time domain may be referred to as a subframe. The subframe may further include one or more slots in the time domain. The subframe may be a fixed length of time (e.g., 1 ms) independent from the numerology.

The numerology may be a communication parameter that is applied to at least one of the transmission and reception of a signal or channel. The numerology may indicate at least one of, for example, SubCarrier Spacing (SCS), bandwidth, symbol length, cyclic prefix length, transmission time interval (TTI), number of symbols per TTI, radio frame configuration, specific filtering processing performed by the transceiver in the frequency domain, and specific windowing processing performed by the transceiver in the time domain.

The slot may include one or more symbols in the time domain, such as OFDM (Orthogonal Frequency Division Multiplexing) symbols, SC-FDMA (Single Carrier Frequency Division Multiple Access) symbols, and the like. The slot may be a time unit based on the numerology.

The slot may include a plurality of mini slots. Each mini slot may include one or more symbols in the time domain. Further, the mini slot may be referred to as a sub-slot. The mini slot may include fewer symbols than the slot. PDSCH (or PUSCH) transmitted in time units greater than a mini slot may be referred to as PDSCH (or PUSCH) mapping type A. PDSCH (or PUSCH) transmitted using a mini slot may be referred to as PDSCH (or PUSCH) mapping type B.

A radio frame, a subframe, a slot, a mini slot, and a symbol all represent time units for transmitting signals. Different terms may be used for referring to a radio frame, a subframe, a slot, a mini slot, and a symbol, respectively.

For example, one subframe may be referred to as a transmission time interval (TTI), multiple consecutive subframes may be referred to as a TTI, and one slot or one mini slot may be referred to as a TTI. In other words, at least one of the subframe and the TTI may be a subframe (1 ms) in an existing LTE, a period shorter than 1 ms (e.g., 1-13 symbols), or a period longer than 1 ms. It should be noted that the unit representing the TTI may be referred to as a slot, a mini slot, or the like, rather than a subframe.

The TTI refers to, for example, the minimum time unit for scheduling in wireless communications. For example, in an LTE system, a base station schedules each terminal 20 to allocate radio resources (such as frequency bandwidth, transmission power, etc. that can be used in each terminal 20) in TTI units. The definition of TTI is not limited to the above.

The TTI may be a transmission time unit, such as a channel-encoded data packet (transport block), code block, codeword, or the like, or may be a processing unit, such as scheduling or link adaptation. It should be noted that, when a TTI is provided, the time interval (e.g., the number of symbols) during which the transport block, code block, codeword, or the like, is actually mapped may be shorter than the TTI.

It should be noted that, when one slot or one mini slot is referred to as a TTI, one or more TTIs (i.e., one or more slots or one or more mini slots) may be the minimum time unit for scheduling. Further, the number of slots (the number of mini slots) constituting the minimum time unit of the scheduling may be controlled.

A TTI having a time length of 1 ms may be referred to as a normal TTI (a TTI in LTE Rel. 8-12), a long TTI, a normal subframe, a long subframe, a slot, and the like. A TTI that is shorter than the normal TTI may be referred to as a shortened TTI, a short TTI, a partial TTI (or fractional TTI), a shortened subframe, a short subframe, a mini slot, a subslot, a slot, or the like.

It should be noted that the long TTI (e.g., normal TTI, subframe, etc.,) may be replaced with a TTI having a time length exceeding 1 ms, and the short TTI (e.g., shortened TTI, etc.,) may be replaced with a TTI having a TTI length less than the TTI length of the long TTI and a TTI length greater than 1 ms.

A resource block (RB) is a time domain and frequency domain resource allocation unit and may include one or more consecutive subcarriers in the frequency domain. The number of subcarriers included in a RB may be the same, regardless of the numerology, and may be 12, for example. The number of subcarriers included in a RB may be determined on the basis of numerology.

Further, the time domain of a RB may include one or more symbols, which may be 1 slot, 1 mini slot, 1 subframe, or 1 TTI in length. One TTI, one subframe, etc., may each include one or more resource blocks.

It should be noted that one or more RBs may be referred to as physical resource blocks (PRBs, Physical RBs), sub-carrier groups (SCGs), resource element groups (REGs), PRB pairs, RB pairs, and the like.

Further, a resource block may include one or more resource elements (RE). For example, 1 RE may be a radio resource area of one sub-carrier and one symbol.

The bandwidth part (BWP) (which may also be referred to as a partial bandwidth, etc.) may represent a subset of consecutive common RBs (common resource blocks) for a given numerology in a carrier. Here, a common RB may be identified by an index of RB relative to the common reference point of the carrier. A PRB may be defined in a BWP and may be numbered within the BWP.

BWP may include BWP for UL (UL BWP) and BWP for DL (DL BWP). For a UE, one or more BWPs may be configured in one carrier.

At least one of the configured BWPs may be activated, and the UE may assume that the UE will not transmit and receive signals/channels outside the activated BWP. It should be noted that the terms "cell" and "carrier" in this disclosure may be replaced by "BWP."

Structures of a radio frame, a subframe, a slot, a mini slot, and a symbol described above are exemplary only. For example, the number of subframes included in a radio frame, the number of slots per subframe or radio frame, the number of mini slots included in a slot, the number of symbols and RBs included in a slot or mini slot, the number of subcarriers included in a RB, the number of symbols in a TTI, the symbol length, the cyclic prefix (CP) length, and the like, may be changed in various ways.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

An aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

The present application is based on and claims priority to Japanese patent application No. 2021-011397 filed on January 27, 2021, the entire contents of which are hereby incorporated herein by reference.

### [DESCRIPTION OF THE REFERENCE NUMERALS]

10 Base station
110 Transmission unit
120 Reception unit
130 Configuration unit
140 Control unit
20 Terminal
210 Transmission unit
220 Reception unit
230 Configuration unit
240 Control unit
1001 Processor
1002 Storage device
1003 Auxiliary storage device
1004 Communication device
1005 Input device
1006 Output device

## Claims

1. A terminal comprising:
a control unit configured to determine a channel access mechanism, based on a condition;
a reception unit configured to perform sensing, based on the determined channel access mechanism; and
a transmission unit configured to perform transmission, based on a result of the sensing, wherein
the determined channel access mechanism is LBT (Listen before talk) with a fixed sensing duration.

2. The terminal as claimed in claim 1, wherein
a unit of the fixed sensing duration is 5 microseconds.

3. The terminal as claimed in claim 1, wherein
the condition is whether a current point in time is within COT (Channel Occupancy Time) acquired by the terminal itself or another terminal.

4. The terminal as claimed in claim 1, wherein
the condition is whether a result of RSSI (Received Signal Strength Indicator) measurement or a result of channel occupancy measurement is less than a threshold value.

5. The terminal as claimed in claim 1, wherein
the condition is an entry is to be indicated via DCI, the entry being in a table specifying the channel access mechanism, and the table being determined based on a band to be used.

6. A communication method performed by a terminal, the communication method comprising:
determining a channel access mechanism, based on a condition;
performing sensing, based on the determined channel access mechanism; and
performing transmission, based on a result of the sensing, wherein
the determined channel access mechanism is LBT (Listen before talk) with a fixed sensing duration.
